(19) Europäisches Patentamt
European Patent Office
Office européen des brevets

(11) **EP 2 176 054 B1**

(12) **EUROPÄISCHE PATENTSCHRIFT**

(45) Veröffentlichungstag und Bekanntmachung des Hinweises auf die Patenterteilung:
**07.05.2014 Patentblatt 2014/19**

(21) Anmeldenummer: **08774768.9**

(22) Anmeldetag: **04.07.2008**

(51) Int Cl.:
***B29C 49/58*** (2006.01)

(86) Internationale Anmeldenummer:
**PCT/EP2008/058665**

(87) Internationale Veröffentlichungsnummer:
**WO 2009/007315 (15.01.2009 Gazette 2009/03)**

(54) **BLASVORRICHTUNG UND VERFAHREN ZUM EXPANDIEREN VON BEHÄLTNISSEN**

BLOWING APPARATUS AND METHOD FOR EXPANDING CONTAINERS

DISPOSITIF ET PROCÉDÉ DE SOUFFLAGE DESTINÉ À DILATER DES RÉCIPIENTS

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **10.07.2007 DE 102007032434**

(43) Veröffentlichungstag der Anmeldung:
**21.04.2010 Patentblatt 2010/16**

(73) Patentinhaber: **Krones AG**
**93073 Neutraubling (DE)**

(72) Erfinder:
• **SPERKA, Wolfgang**
**84130 Dingolfing (DE)**
• **BLOCHMANN, Erik**
**93073 Neutraubling (DE)**
• **GELTINGER, Florian**
**93093 Donaustauf (DE)**

(74) Vertreter: **Hannke, Christian**
**Hannke Bittner & Partner**
**Patent- und Rechtsanwälte**
**Prüfeninger Strasse 1**
**93049 Regensburg (DE)**

(56) Entgegenhaltungen:
**FR-A- 2 876 942      FR-A- 2 912 678**
**US-A- 4 552 527      US-A1- 2003 077 349**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung bezieht sich auf eine Vorrichtung zum Behandeln von Behältnissen und insbesondere eine Blasvorrichtung zum Expandieren von Behältnissen. Daneben ist die Erfindung auch auf ein Verfahren zum Expandieren von Behältnissen gerichtet.

Aus dem Stand der Technik ist es im Rahmen der Herstellung verschiedener Gefäße bekannt, diese mit Hilfe einer Blasdüse aufzublasen. Dazu werden entsprechende Rohlinge erwärmt und dann mit Druckluft unter einem Druck im Bereich von ca. 40 bar durch eine Blasdüse beaufschlagt. Durch diesen Druck wird das Behältnis expandiert. Dabei ist es aus dem Stand der Technik bekannt, dass während des eigentlichen Expansionsvorgangs, d. h. des Vorgangs, bei dem das Behältnis mit der Druckluft expandiert wird, eine Abdichtung zwischen der Blasvorrichtung und dem Behältnis stattfindet, damit das Behältnis ordnungsgemäß expandiert werden kann. Dabei ist es bekannt, eine solche Abdichtung beispielsweise an dem oberen Rand der Mündung des Behältnisses vorzunehmen oder auch unterhalb des Mündungsrandes.

Unter einer Mündung wird im Folgenden ein Bereich des Vorformlings verstanden, der einen Kragen und einen sich über diesem Kragen in Richtung der Ausgießöffnung erstreckenden Bereich aufweist. Gemäß einer bevorzugten Weiterbildung weist die Mündung ein Gewinde auf. Unter einem Kragen wird eine radial vorstehende, zumindest teilumfängliche Materialanhäufung verstanden, die vorzugsweise als Ring ausgebildet ist. Der Kragen kann in diesem Fall als Tragring, aber auch als Sicherungsring, ausgebildet sein. Die Erfindung ist jedoch nicht auf die Verwendung der obigen Mündungen beschränkt.

US-A-4552527 offenbart eine Blasvorrichtung gemäß dem Oberbegriff des Anspruchs 1 und ein Verfahren zum Expandieren von Behältnissen gemäß dem Oberbegriff des Anspruchs 13.

Um diese Abdichtung zu erreichen, wird im Stand der Technik der Blaskolben auf das Gefäß herabgesenkt und üblicherweise an dieses angedrückt. Dabei lässt sich der Anpressdruck nur relativ schwer steuern. Ein zu hoher Druck auf die Mündung des Vorformlings kann zu Verformungen führen und ein zu geringer Druck dazu, dass keine ordnungsgemäße Abdichtung zwischen der Blasvorrichtung und dem Behältnis erfolgt.

Der vorliegenden Erfindung liegt daher die Aufgabe zugrunde, einen Blasvorgang für Kunststoffbehältnisse zu verbessern und insbesondere die Abdichtung zwischen der Blasvorrichtung und dem Behältnis zu verbessern, ohne gleichzeitig eine Verformung des Vorformlings zu riskieren.

Dies wird erfindungsgemäß durch eine Blasvorrichtung nach Anspruch 1 und ein Verfahren nach Anspruch 13 erreicht. Vorteilhafte Ausführungsformen und Weiterbildungen sind Gegenstand der Unteransprüche.

Die Blasvorrichtung zum Expandieren von Behältnissen mit einem gasförmigen Medium weist einen Blaskolben und eine Blasdüse auf, wobei durch die Blasdüse das Behältnis mit dem gasförmigen Medium expandiert wird. Der Blaskolben ist in einer Längsrichtung der Blasdüse bewegbar und die Blasdüse bezüglich dem Blaskolben in der Längsrichtung ebenfalls beweglich und weiterhin eine Führungseinrichtung vorgesehen, welche die Bewegung der Blasdüse in der Längsrichtung gegenüber dem Blaskolben führt.

Damit sind zwei unterschiedliche Bewegungsfreiheitsgrade vorgesehen, nämlich einerseits ein Bewegungsfreiheitsgrad des Blaskolbens in einer Längsrichtung, wobei diese Längsrichtung üblicherweise auch die Längsrichtung des zu expandierenden Behältnisses ist und weiterhin ein Bewegungsfreiheitsgrad der Blasdüse gegenüber dem Blaskolben in der Längsrichtung. Durch diesen weiteren Bewegungsfreiheitsgrad in der Längsrichtung ist eine feinere Regulierung des Anpressdrucks der Blasvorrichtung gegenüber dem Behältnis möglich.

Bei einer weiteren vorteilhaften Ausführungsform ist die Blasdüse derart gestaltet, dass sie bei einer Beaufschlagung des Behältnisses mit dem gasförmigen Medium durch das gasförmige Medium in Richtung des Behältnisses gedrängt wird. Dies bedeutet, dass der Luftstrom, der ein Expandieren des Behältnisses bewirkt, gleichzeitig auch die Blasdüse und evtl. auch die Führungseinrichtung in Richtung des Behältnisses drängt und damit einen Abdichteffekt zwischen dem Behältnis und der Führungseinrichtung bewirkt.

Bei einer weiteren vorteilhaften Ausführungsform ist die Blasdüse radial innerhalb der Führungseinrichtung angeordnet und wird auf diese Weise von der Führungseinrichtung geführt.

Bei einer weiteren bevorzugten Ausführungsform weist die Blasvorrichtung eine Vorspanneinrichtung auf, welche die Blasdüse gegenüber dem Blaskolben und evtl. auch gegenüber der Führungseinrichtung in der Längsrichtung und in Richtung des Behältnisses drängt. Bei dieser Ausführungsform ist besonders bevorzugt die Blasdüse parallel zur Blaskolbenachse beweglich geführt und wird mittels einer Feder - bevorzugt einer Spiralfeder - vorgespannt. Die Führung ist dabei ebenfalls an dem Blaskolben montiert. Durch die Feder wird damit eine gewisse Vorspannung der Düse gegenüber dem Behältnis bewirkt.

Bei einer weiteren vorteilhaften Ausführungsform weist die Blasdüse einen ersten Abschnitt (Düsenabschnitt) mit einem ersten Innenquerschnitt und einen zweiten Abschnitt (Düsenkolben) mit einem zweiten Innenquerschnitt auf. Dabei weicht der erste Innenquerschnitt von dem zweiten Innenquerschnitt ab. Besonders bevorzugt ist ein unterer Querschnitt der Blasdüse vorgesehen und ein oberer diesem gegenüber größerer Querschnitt. Mit anderen Worten weist bevorzugt die Düse einen dem zugehörigen Vorformdurchmesser angepassten Düsendurchmesser sowie eine auf den gewünschten Anpressdruck zwischen Düse und Vorform abgestimmte resultierende Fläche auf.

Das zum Expandieren des Behältnisses durch die Düse strömende gasförmige Medium bewirkt auf diese Weise einen Druck auf der resultierenden Fläche, welche sich aus der Differenz der beiden Innenquerschnitte ergibt und bewirkt auf diese Weise ein Andrücken der Düse bzw. auf der Führungseinrichtung gegenüber dem Behältnis. Genauer gesagt weist bevorzugt die Düse selbst ein Dichtungsmittel auf, welches die Abdichtung gegenüber beispielsweise dem oberen Rand der Mündung oder auch anderen Bereichen der Mündung bewirkt. Das Dichtungsmittel kann dabei sowohl ein Elastomer sein, als auch die Düse selbst, sodass dann eine Dichtung zwischen Metall (Blasdüse) und Kunststoff (Behältnis).

In einer weiteren bevorzugten Ausführungsform verjüngt sich der Innenquerschnitt der Blasdüse in der Längsrichtung von oben nach unten. Dabei kann diese Verjüngung bevorzugt stetig erfolgen. In diesem Fall wird durch den sich verjüngenden Innenquerschnitt erreicht, dass das durch die Blasdüse hindurchtretende Medium die Blasdüse in Richtung des Behältnisses drängt.

Bei einer weiteren vorteilhaften Ausführungsform weist die Führungseinrichtung eine Innenwandung auf, die die Mündung des Behältnisses während des Blasvorgangs in der Längsrichtung des Behältnisses wenigstens abschnittsweise, jedoch vollumfänglich, umgibt. Auf diese Weise kann eine verbesserte Zentrierung der Blasvorrichtung gegenüber dem zu expandierenden Behältnis erreicht werden.

Unter einer Führungseinrichtung wird jede Einrichtung verstanden, welche eine Bewegung eines Elements gegenüber einem anderen Element führt. Vorzugsweise ist die Führungseinrichtung an dem Blaskolben und in der Längsrichtung unbeweglich gegenüber einem Blaskolben angeordnet. Vorzugsweise ist die Führungseinrichtung auch lösbar an dem Blaskolben angeordnet. Auf diese Weise kann beispielsweise im Rahmen eines Garniturenwechsels die Führungseinrichtung gemeinsam mit der Blasdüse ausgewechselt werden, um schnell eine Umstellung auf andere Mündungseigenschaften zu erreichen. Es wäre jedoch auch möglich, dass die Führungseinrichtung fest an der Blasdüse und beweglich gegenüber dem Blaskolben angeordnet ist. Mit anderen Worten macht das erfindungsgemäße Konzept bei einem Garniturenwechsel einen Blaskolbenwechsel überflüssig, es genügt, lediglich die Blasdüse mit ihrer Führungseinrichtung auszutauschen.

Bei einer weiteren vorteilhaften Ausführungsform weist die Blasvorrichtung eine Dichtungseinrichtung auf, welche während des Blasvorgangs mit einem Bereich der Wandung des Behältnisses in Kontakt steht und einen Raum zwischen der Blasdüse und einer Wandung des Behältnisses abdichtet. Diese Dichtungseinrichtung ist, wie oben erwähnt, bevorzugt an der Blasdüse angeordnet und bewirkt, dass das Behältnis expandiert werden kann, ohne dass das gasförmige Medium, wie beispielsweise Blasluft, nach außen treten kann. Bevorzugt ist der Bereich der Wandung ein oberer Mündungsrand des Behältnisses und damit die Blasvorrichtung eine oben abdichtende Blasvorrichtung. Diese Dichtungseinrichtung ist bevorzugt aus einem Elastomer hergestellt oder weist ein solches auf. Allerdings kann die Dichtungsrichtung auch metallisch sein, sodass dann eine Dichtung zwischen einem Kunststoff (Behältnis) und einem Metall (Blasdüse) erfolgt.

Bei einer weiteren Ausführungsform ist der Bereich der Mündung ein Bereich des Außenumfangs der Mündung des Behältnisses und bevorzugt der Tragring des Behältnisses und damit die Blasvorrichtung eine außenabdichtende Blasvorrichtung.

Im Betrieb wird der Blaskolben in eine untere Endlage gefahren und die Düse über die Vorspanneinrichtung auf den Vorformling gepresst. Anschließend wird der Vorformling expandiert bzw. die Flasche geblasen. Durch die resultierende Fläche der Düse bzw. die oben erwähnte Differenz des Innenquerschnitts wird über den bereits ausgeübten Druck durch die Vorspanneinrichtung ein zusätzlicher Anpressdruck zur Federkraft erzeugt, der die Düse gegenüber dem Tragring oder auch gegenüber einem Bereich der Mündung abdichtet.

Bei einer weiteren vorteilhaften Ausführungsform ist zwischen der Führungseinrichtung und der Blasdüse ein Dichtring vorgesehen.

Bei einer weiteren vorteilhaften Ausführungsform ist die Blasdüse mittels einem die Blasdüse in Umfangsrichtung umgebenen Schraubkörper gegenüber der Führungseinrichtung gesichert. Bevorzugt weist die Führungseinrichtung dabei ein Gewinde auf. Durch Lösen des Schraubkörpers kann auf diese Weise die Blasdüse selbst von der Führungseinrichtung gelöst werden. Auch die Führungseinrichtung ist von dem Blaskolben beispielsweise durch Lösen einer oder mehrerer Schrauben lösbar.

Die vorliegende Erfindung ist weiterhin auf eine Anordnung zum Expandieren von Behältnissen mit einer Blasvorrichtung der oben beschriebenen Art gerichtet.

Vorzugsweise wird die vorliegende Erfindung bei der Herstellung von Flaschen aus Kunststoff, und bevorzugt aus PET, verwendet. Damit bezieht sich die Erfindung insbesondere auf eine Streckblasmaschine und insbesondere auf eine Rotationsstreckblasmaschine. In einer Streckblasmaschine befinden sich mehrere erfindungsgemäße Blasvorrichtungen, die jeweils mindestens eine Blasform, eine Vorrichtung von Herstellen von Flaschen sowie bevorzugt wenigstens drei Ventile zum Schalten bzw. Steuern der Blasluft aufweisen. Dabei steuern diese Ventile die Zuführung der Blasluft zum Expandieren der Behältnisse. Es wird darauf hingewiesen, dass in einer besonders bevorzugten Ausführungsform diejenige Luft, die zum Expandieren der Behältnisse dient, gleichzeitig auch dazu dient, dass ein erhöhter Anpressdruck der Blasdüse an das Behältnis erreicht wird.

Die vorliegende Erfindung ist weiterhin auf ein Verfahren zum Befüllen und Expandieren von Behältnissen mit einem gasförmigen Medium gerichtet. Dabei wird in einem ersten Verfahrensschritt ein Blaskolben mit einer an diesem Blaskolben in der Längsrichtung des Behältnisses beweglich angeordneten Blasdüse in der Längsrichtung des Behältnisses bis zu einer vorgegebenen Endposition des Blaskolbens gegenüber dem Behältnis abgesenkt. In einem weiteren Verfahrensschritt wird das Behältnis durch die Blasdüse mit dem gasförmigen Medium befüllt.

Erfindungsgemäß bewirkt das durch die Blasdüse strömende gasförmige Medium während des Befüllungs- bzw. Expansionsvorganges, dass die Blasdüse in der Längsrichtung des Behältnisses in Richtung des Behältnisses gedrängt wird bzw. dass die Blasdüse auf das Behältnis einen Druck in der Längsrichtung ausübt.

Genauer gesagt wird durch die oben erwähnten unterschiedlichen Querschnitte der Blasdüse bewirkt, dass der Blaskolben auf die Mündung zu bewegt wird.

Es wäre jedoch auch möglich, dass der zusätzliche Druck der Blasdüse auf das Behältnis durch eine Vorspanneinrichtung wie eine Spiralfeder anstelle durch den Luftstrom bewirkt wird. Dabei ist es auch möglich, die Spiralfeder oder deren Anordnung so zu gestalten, dass die Federkraft auf die Blasdüse durch den Benutzer verändert werden kann. Besonders bevorzugt wird jedoch der Druck auf das Behältnis sowohl durch die Spiralfeder als auch durch die während des Expansionsvorganges durchströmende Luft bewirkt.

Bei dieser bevorzugten Ausführungsform wird also die Blasdüse durch eine Vorspann- bzw. Federeinrichtung gegenüber dem Behältnis vorgespannt. Bei einem weiteren vorteilhaften Verfahren ist die Blasdüse in der Längsrichtung mittels einer Führungseinrichtung beweglich gegenüber dem Blaskolben geführt.

Weitere Vorteile und Ausführungsformen ergeben sich aus den beigefügten Zeichnungen.

Darin zeigen:

Fig. 1     eine erfindungsgemäße Blasvorrichtung mit einem zu expandierenden Behältnis;

Fig. 2     die Blasvorrichtung aus Fig. 1 in einer ersten Arbeitsposition;

Fig. 3     die Blasvorrichtung aus Fig. 1 in einer zweiten Arbeitsposition;

Fig. 4     die Blasvorrichtung aus Fig. 1 in einer dritten Arbeitsposition; und

Fig. 5     eine weitere erfindungsgemäße Blasvorrichtung.

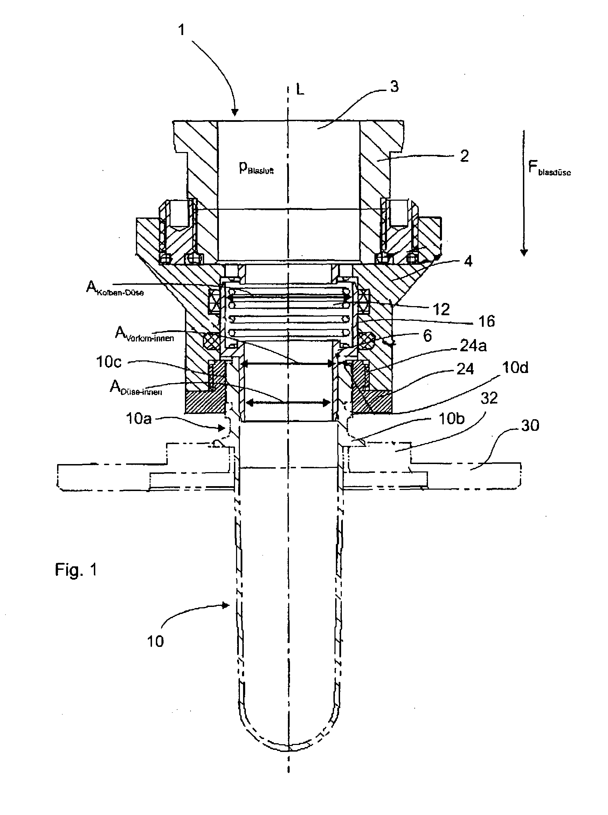

Fig. 1 zeigt eine erfindungsgemäße Blasvorrichtung 1 in einer ersten Ausführungsform. Diese Blasvorrichtung 1 weist einen Blaskolben 2 auf. Der Blaskolben 2 wird durch eine (nicht gezeigte) Leitkurve in eine bestimmte (End)lage gefahren, um in dieser (End)lage ein Behältnis 10, hier einen Vorformling, mit Druckluft zu beaufschlagen, um ihn dadurch auszudehnen. Das Behältnis 10 ist mit Hilfe einer Zentrierplatte 30 in einer (nicht gezeigten) Blasform angeordnet. Das Bezugszeichen 32 zeigt einen Vorsprung der Zentrierplatte 30, der gegenüber sich ein Tragring 10b des Behältnisses abstützt. Das Bezugszeichen 10a bezieht sich in seiner Gesamtheit auf eine Mündung des Behältnisses 10. An dieser Mündung 10a sind auch ein Gewinde 10c sowie ein weiterer Ring 10d vorgesehen.

An dem Blaskolben 2 ist eine Führungseinrichtung 4 lösbar montiert. Eine Blasdüse 6 ist gegenüber dieser Führungseinrichtung 4 in einer Längsrichtung L beweglich angeordnet. Dabei wird die Blasdüse 6 durch eine Feder auf das Behältnis 10 zubewegt. Das Bezugszeichen 24 bezieht sich auf einen Schraubkörper, mit dem die Blasdüse 6 in die Führungseinrichtung 4 eingeschraubt ist. Genauer gesagt weist dieser Schraubkörper 24 ein Schraubgewinde 24a auf, welches mit einem entsprechenden Innengewinde der Führungseinrichtung 4 zusammenwirkt.

Die Blasdüse 6 weist einen Innenquerschnitt $A_{Düse\text{-}innen}$ auf. Daneben weist die Blasdüse 6 einen Düsenkolben 16 auf, der gegenüber der Führungseinrichtung 4 in der Längsrichtung L beweglich ist. Dieser Düsenkolben 16 weist einen Innenquerschnitt $A_{Kolben\text{-}Düse}$ auf. Das Bezugszeichen $A_{Vorform,innen}$ bezieht sich auf den Innenquerschnitt des Vorformlings bzw. Behältnisses 10, insbesondere dessen Mündung 10a.

Durch eine Öffnung 3 des Blaskolbens 2 wird die Düse 6 und damit das Behältnis 10 mit Druckluft des Drucks $P_{Blasluft}$ beaufschlagt. Durch diese Druckluft ergibt sich die auf die Blasdüse wirkende Kraft $F_{Blasdüse}$ wie folgt:

$$F_{Blasdüse} = P_{Blasluft} \cdot (A_{Kolben\text{-}Düse} - A_{Düse,\,innen}) - (A_{Vorform,innen} - A_{Düse,innen})$$

$$F_{Blasdüse} = P_{Blasdüse} \cdot (A_{Kolben-Düse} - A_{Vorform, innen})$$

Dies bedeutet, dass die auf die Blasdüse F wirkende Kraft $F_{Blasdüse}$ lediglich von dem Innenquerschnitt $A_{Kolbe-Düse}$ des Kolbens 16 und dem Innenquerschnitt $A_{Vorform,innen}$ des Behältnisses 10 abhängt. Damit weist erfindungsgemäß die Blasdüse 6 einen dem zugehörigen Vorformdurchmesser angepassten Düsendurchmesser auf sowie eine auf den gewünschten Anpressdruck zwischen der Blasdüse 6 und dem Behältnis 10 abgestimmte resultierende Fläche. Diese Abstimmung erfolgt durch eine geeignete Wahl des Führungsdurchmessers bzw. Führungsradius $R_{Führung}$, da sich die resultierende Fläche $A_{Res}$ wie folgt ergibt:

$$A_{Res} = ((R_{Führung})^2 - (R_{Düse})^2) \cdot \pi$$

Der Radius der Blasdüse $R_{Düse}$ (bzw. des Düsenabschnitts 14) ist dabei bereits durch die Art des Vorformlings bestimmt.

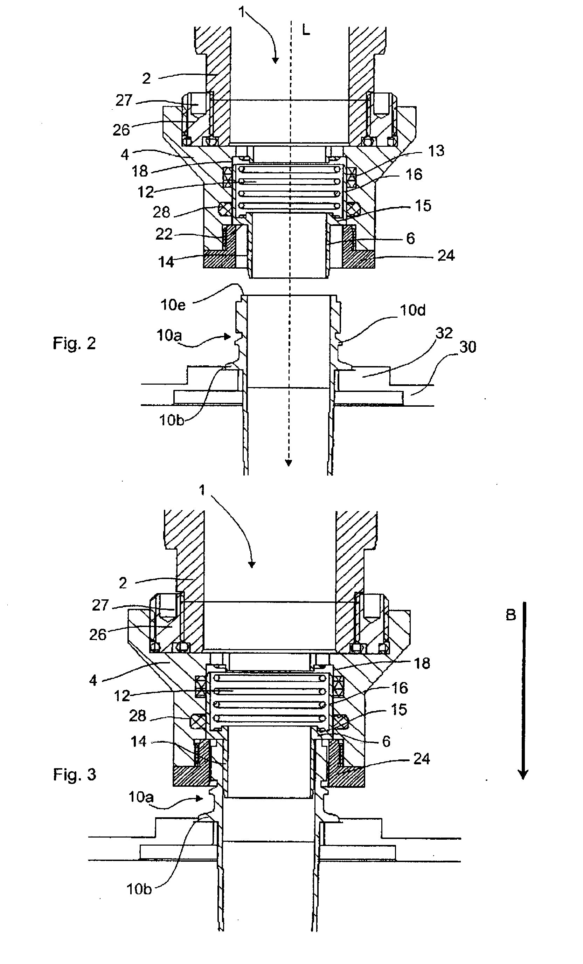

Fig. 2 zeigt eine Blasvorrichtung aus Fig. 1 in einer ersten Arbeitsposition, d. h. bevor die Blasvorrichtung 1 auf die Mündung 10a des Behältnisses 10 (bzw. bevorzugt die Außenwandung dieser Mündung 10a) aufgesetzt wird. An dem Blaskolben 2 ist über eine Verschraubung 26, 27 die Führungseinrichtung 4 fest, jedoch lösbar montiert. Die Druckluft gelangt durch den Blaskolben 2 in der Richtung L zu der Blasdüse 6. Diese Blasdüse 6 weist einen Düsenabschnitt 14 und den bereits oben erwähnten Düsenkolben 16 auf. Dieser Düsenkolben 16 und der Düsenabschnitt 14 sind miteinander einteilig ausgebildet und über einen radial verlaufenden Ring 15 verbunden. Das Bezugszeichen 28 bezieht sich auf eine Dichtungseinrichtung, mit der der Blaskolben 6 gegenüber der Führungseinrichtung 4 abgedichtet ist.

Bei der in Fig. 2 gezeigten Ausführungsform weist der Blaskolben 6 eine Dichtungseinrichtung 22 an seiner Unterseite auf, die an einen Mündungsrand 10e des Behältnisses 10 pressbar ist.

Das Bezugszeichen 13 bezieht sich auf einen Führungsring zum Führen der Blasdüse 6 gegenüber der Führungseinrichtung 4. Der Schraubkörper 24 bzw. die Begrenzungsmutter 24 begrenzt gleichzeitig die Bewegung der Blasdüse 6 gegenüber der Führungseinrichtung 4 in der Längsrichtung L.

Fig. 3 zeigt eine Position der Blasvorrichtung 1, in der sie in Kontakt mit der Mündung 10a des Behältnisses 10 steht. Genauer gesagt liegt der oben erwähnte Mündungsrand 10e nunmehr an der Dichtungseinrichtung 22 der Blasdüse 6 an, so dass der zwischen der Blasdüse 6, genauer gesagt deren Düsenabschnitt 14 und dem Behältnis 10 der dazwischen liegende Raum abgedichtet wird.

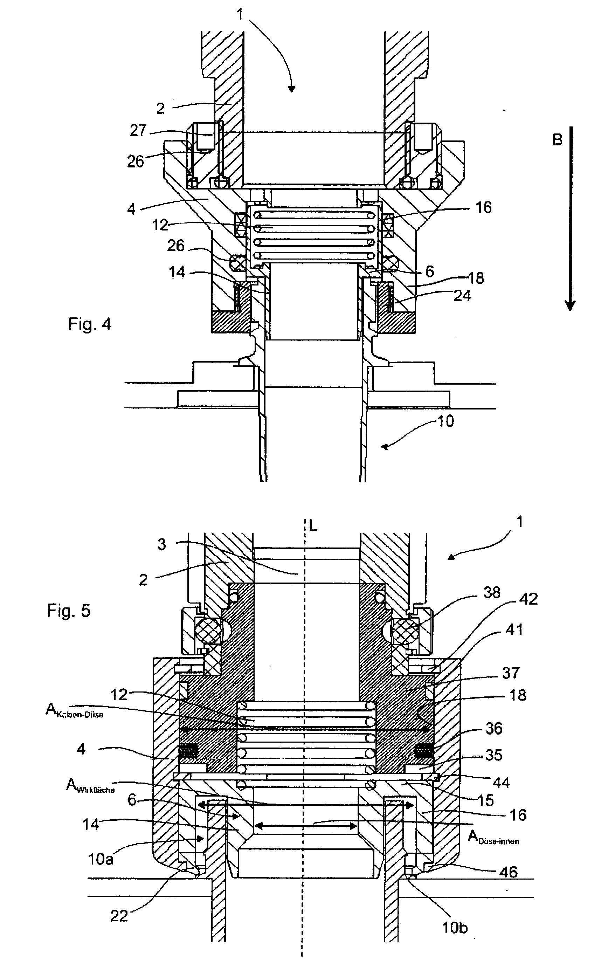

Bei der in Fig. 4 gezeigten Darstellung wurde der Blaskolben 2 noch einmal geringfügig nach unten bewegt, und, da bereits bei der in Fig. 3 gezeigten Situation die Blasdüse an dem oberen Rand 10e des Behältnisses 10 anstand, wird auf diese Weise eine Vorspannung einer Vorspanneinrichtung bzw. Feder 12 bewirkt. Genauer gesagt wird durch die Feder 12 die Blasdüse 6 gegenüber der Führungseinrichtung 4 nach unten, d. h. auf das Behältnis 10 hin gespannt.

Ausgehend von der in Fig. 4 gezeigten Situation wird der Blaskolben 2 und damit auch die Blasdüse 6 mit Druckluft beaufschlagt, was dazu führt, dass auf die Blasdüse 6 ein weiterer in der Richtung B wirkender Druck gemäß obiger Gleichung ausgeübt wird. Durch diesen Druck wird die Dichtwirkung zwischen dem Behältnis 10 und der Blasdüse 6 erhöht. Da die von der Blasdüse auf das Behältnis wirkende Kraft auch direkt von dem Druck der Blasluft abhängt, wird mit steigendem Druck der Blasluft auch der Anpressdruck der Blasdüse 6 an den oberen Rand 10e des Behältnisses 10 erhöht und damit bei einer Steigerung des Drucks der Blasluft auch gleichzeitig die Abdichtwirkung erhöht.

Fig. 5 zeigt eine weitere Ausführungsform einer erfindungsgemäßen Blasvorrichtung 1. Im Gegensatz zu der in den vorangegangenen Figuren dargestellten Blasvorrichtung 1 erfolgt hier eine Abdichtung des Behältnisses 10 von außen her, genauer gesagt über den Tragring 10b des Behältnisses 10. Bei dieser Ausführungsform ist die Führungseinrichtung 4 fest in der Längsrichtung L an der Blasdüse 6 angeordnet. Genauer gesagt ist die Führungseinrichtung 4 in der Längsrichtung durch eine untere Nase 46 und einen ersten Sicherungsring 44 arretiert. Andererseits ist jedoch die Führungseinrichtung 4 in Längsrichtung L beweglich gegenüber dem Blaskolben 2 bzw. einem an diesem Blaskolben 2 fest angeordneten Zwischenstück 37. An den Innenumfang der Führungseinrichtung 4 ist neben dem erwähnten ersten Sicherungsring 44 auch ein zweiter Sicherungsring 42 vorgesehen. Durch den Abstand dieser beiden Sicherungsringe und ggfs. auch die Breite der Ausnehmung 35 wird der Bereich bestimmt, um den die Führungseinrichtung 4 gegenüber dem Zwischenstück 37 und damit auch den Blaskolben 2 in der Längsrichtung L verschoben werden kann.

Das Bezugszeichen 36 bezieht sich auf eine Dichtungseinrichtung, die zwischen der Führungseinrichtung 4 und dem Zwischenstück 37, genauer gesagt einer Innenwandung 18 der Führungseinrichtung 4 und dem Zwischenstück 37, vorgesehen ist. Das Bezugszeichen 41 bezieht sich auf einen Führungsring.

Das Zwischenstück 37 ist hier mit Hilfe eines Schnellverschlusses an dem Blaskolben 2 angeordnet, wobei sich das Bezugszeichen 38 auf Kugeln dieses Schnellverschlusses bezieht. Es sind jedoch auch andere Möglichkeiten denkbar, um das Zwischenstück 37 an dem Blaskolben lösbar anzuordnen, wie etwa Schraubgewinde.

Das Bezugszeichen 12 bezieht sich auch hier wieder auf eine Spiralfeder, die zwischen der Blasdüse 6 und dem Blaskolben 2, genauer gesagt dem fest an dem Blaskolben 2 angeordneten Zwischenstück 37, vorgesehen ist.

Bei der in Fig. 5 gezeigten Ausführungsform ergibt sich die auf die Blasdüse durch die Druckluft wirkende Kraft $F_{Blasdüse}$ wie folgt.

$$F_{Blasdüse} = P_{Blasluft} \cdot (A_{Kolben\text{-}Düse} - A_{Düse,\,innen}) - (A_{Wirkfläche} - A_{Düse,\,innen})$$

$$F_{Blasdüse} = P_{Blasluft} \cdot (A_{Kolben\text{-}Düse} - A_{Wirkfläche})$$

Damit hängt auch die auf die Blasdüse wirkenden Kraft nur von dem Querschnitt $A_{Kolben\text{-}Düse}$ des Düsenkolbens 16 und der Wirkfläche $A_{Wirkfläche}$ ab.

Es wird darauf hingewiesen, dass sich der jeweilige Subtrahend in obigen Gleichungen durch den Gegendruck ergibt, der seinerseits von dem Behältnis nach oben gerichtet, d. h. in Richtung der Blasdüse wirkt. In guter Näherung entspricht dabei dieser Druck den oben erwähnten Druck der Blasluft $P_{Blasluft}$.

## Patentansprüche

1. Blasvorrichtung (1) zum Expandieren von Behältnissen (10) mit einem gasförmigen Medium, mit einem Blaskolben (2) und mit einer Blasdüse (6), durch welche das Behältnis (10) mit dem gasförmigen Medium expandiert wird, wobei der Blaskolben (2) in einer Längsrichtung (L) der Blasdüse (6) bewegbar ist, die Blasdüse (6) bezüglich dem Blaskolben (2) in der Längsrichtung (L) beweglich ist und eine Führungseinrichtung (4) vorgesehen ist, welche die Bewegung der Blasdüse (6) in der Längsrichtung (L) gegenüber dem Blaskolben (2) führt und wobei die Blasdüse (6) derart gestaltet ist, dass sie bei einer Beaufschlagung des Behältnisses (10) mit dem gasförmigen Medium durch das gasförmige Medium in Richtung des Behältnisses (10) gedrängt wird, **dadurch gekennzeichnet, dass** die Blasdüse (6) einen Düsenabschnitt (14) mit einem ersten Innenquerschnitt ($A_{Düse,\,innen}$) und einen mit **dem Düsenabschnitt (14) einteilig ausgebildeten** und über einen radial verlaufenden Ring (15) verbundenen Düsenkolben (16) mit einem zweiten Innenquerschnitt ($A_{Kolben\text{-}Düse}$) aufweist, wobei der zweite Innenquerschnitt ($A_{Kolben\text{-}Düse}$) von dem ersten Innenquerschnitt ($A_{Düse,\,innen}$) abweicht.

2. Blasvorrichtung (1) nach Anspruch 1, **dadurch gekennzeichnet, dass** die Blasdüse (6) radial innerhalb der Führungseinrichtung (4) angeordnet ist.

3. Blasvorrichtung (1) nach Anspruch 1, **dadurch gekennzeichnet, dass** die Blasvorrichtung (1) eine Vorspanneinrichtung (12) aufweist, welche die Blasdüse (6) gegenüber dem Blaskolben (2) in der Längsrichtung (L) in Richtung des Behältnisses (10) drängt.

4. Blasvorrichtung (1) nach wenigstens einem der vorangegangenen Ansprüche, **dadurch gekennzeichnet, dass** die Führungseinrichtung (4) eine Innenwandung (18) aufweist, der eine Mündung (10a) des Behältnisses (10) während des Blasvorgangs umgibt.

5. Blasvorrichtung nach Anspruch 1, **dadurch gekennzeichnet, dass** die Führungseinrichtung (4) an dem Blaskolben (2) und in der Längsrichtung (L) unbeweglich gegenüber dem Blaskolben (2) angeordnet ist.

6. Blasvorrichtung (1) nach Anspruch 1, **dadurch gekennzeichnet, dass** die Führungseinrichtung (4) lösbar an dem Blaskolben (2) angeordnet ist.

7. Blasvorrichtung (1) nach wenigstens einem der vorangegangenen Ansprüche, **dadurch gekennzeichnet, dass** die Blasvorrichtung (1) eine Dichtungseinrichtung (22) aufweist, welche während des Blasvorgangs mit einem Bereich der Mündung (10a) des Behältnisses (10) in Kontakt steht und einen Raum zwischen der Blasdüse (6) und den Bereich der Mündung (10a) des Behältnisses (10) abdichtet.

8. Blasvorrichtung (1) nach Anspruch 7, **dadurch gekennzeichnet, dass** der Bereich der Mündung (10a) ein oberer Mündungsrand (10e) des Behältnisses (10) ist.

9. Blasvorrichtung (1) nach Anspruch 7, **dadurch gekennzeichnet, dass** der Bereich der Mündung (10a) ein Bereich des Außenumfangs der Mündung (10a) des Behältnisses (10) ist.

10. Blasvorrichtung (1) nach wenigstens einem der vorangegangenen Ansprüche, **dadurch gekennzeichnet, dass** zwischen der Führungseinrichtung (4) und der Blasdüse (6) ein Dichtring (26) angeordnet ist.

11. Blasvorrichtung (1) nach wenigstens einem der vorangegangenen Ansprüche, **dadurch gekennzeichnet, dass** die Blasdüse (16) mittels einem die Blasdüse (6) in Umfangsrichtung umgebenden Schraubkörper (24) gegenüber der Führungseinrichtung (4) gesichert ist.

12. Anordnung zum Expandieren von Behältnissen mit einer Blasvorrichtung nach wenigstens einem der vorangegangenen Ansprüche.

13. Verfahren zum Expandieren von Behältnissen (10) mit einem gasförmigen Medium mit den Schritten:

- Absenken eines Blaskolbens (2) mit einer an diesem Blaskolben (2) in einer Längsrichtung (L) des Behältnisses (10) beweglich angeordneten Blasdüse (6) in der Längsrichtung (2) des Behältnisses (10) bis zu einer vorgegebenen Endposition des Blaskolbens (2) gegenüber dem Behältnis (10);
- Befüllen des Behältnisses (10) durch die Blasdüse (6) mit dem gasförmigen Medium; **dadurch gekennzeichnet, dass** die Blasdüse (6) einen Düsenabschnitt (14) mit einem ersten Innenquerschnitt ($A_{Düse, innen}$) und einen mit dem **Düsenabschnitt (14) einteilig ausgebildeten** und über einen radial verlaufenden Ring (15) verbundenen Düsenkolben (16) mit einem zweiten Innenquerschnitt ($A_{Kolben-Düse}$) aufweist, wobei durch die unterschiedlichen Querschnitte der Blasdüse bewirkt wird, dass das durch die Blasdüse (6) strömende gasförmige Medium während des Befüllungsvorgangs bewirkt, dass die Blasdüse (6) auf das Behältnis (10) einen Druck in der Längsrichtung (L) ausübt.

14. Verfahren zum Befüllen von Behältnissen nach Anspruch 10, **dadurch gekennzeichnet, dass** die Blasdüse (6) durch eine Vorspanneinrichtung (12) gegenüber dem Behältnis (10) vorgespannt wird.

15. Verfahren nach wenigstens einem der vorangegangenen Ansprüche, **dadurch gekennzeichnet, dass** die Blasdüse (6) in der Längsrichtung (L) mittels einer Führungseinrichtung (4) beweglich gegenüber dem Blaskolben (2) geführt wird.

## Claims

1. Blowing apparatus (1) for expanding containers (10) with a gaseous medium, comprising a blowing piston (2) and a blowing nozzle (6), through which the container (10) is expanded with the gaseous medium, wherein the blowing piston (2) is movable in a longitudinal direction (L) of the blowing nozzle (6), the blowing nozzle (6) is movable in the longitudinal direction (L) relative to the blowing piston (2), and a guide device (4) is provided which guides the movement of the blowing nozzle (6) in the longitudinal direction (L) relative to the blowing piston (2) and wherein the blowing nozzle (6) is configured in such a way that it is urged towards the container (10) by the gaseous medium as the container (10) is acted upon by the gaseous medium, **characterised in that** the blowing nozzle (6) comprises a nozzle section (14) with a first internal cross-section ($A_{nozzle, internal}$) and a nozzle piston (16), formed in one part with the nozzle section (14) and which is connected by means of a radially extending ring (15), with a second internal cross-section ($A_{piston-nozzle}$), wherein the second internal cross-section ($A_{piston-nozzle}$) differs from the first internal cross-section ($A_{nozzle, internal}$).

2. Blowing apparatus (1) according to claim 1, **characterised in that** the blowing nozzle (6) is arranged radially inside the guide device (4).

3. Blowing apparatus (1) according to claim 1, **characterised in that** the blowing apparatus (1) comprises a pretensioning device (12) which urges the blowing nozzle (6) towards the container (10) in the longitudinal direction (L) relative to the blowing piston (2).

4. Blowing apparatus (1) according to at least one of the preceding claims, **characterised in that** the guide device (4) has an inner wall (18) which surrounds a mouth (10a) of the container (10) during the blowing process.

5. Blowing apparatus (1) according to claim 1, **characterised in that** the guide device (4) is arranged on the blowing piston (2) and immovably in the longitudinal direction (L) relative to the blowing piston (2).

6. Blowing apparatus (1) according to claim 1, **characterised in that** the guide device (4) is detachably arranged on the blowing piston (2).

7. Blowing apparatus (1) according to at least one of the preceding claims, **characterised in that** the blowing apparatus (1) comprises a sealing device (22) which is in contact with a region of the mouth (10a) of the container (10) during the blowing process and seals off a space between the blowing nozzle (6) and the region of the mouth (10a) of the container (10).

8. Blowing apparatus (1) according to claim 7, **characterised in that** the region of the mouth (10a) is an upper mouth rim (10e) of the container (10).

9. Blowing apparatus (1) according to claim 7, **characterised in that** the region of the mouth (10a) is a region of the outer circumference of the mouth (10a) of the container (10).

10. Blowing apparatus (1) according to at least one of the preceding claims, **characterised in that** a sealing ring (26) is arranged between the guide device (4) and the blowing nozzle (6).

11. Blowing apparatus (1) according to at least one of the preceding claims, **characterised in that** the blowing nozzle (6) is secured relative to the guide device (4) by means of a screw body (24) which surrounds the blowing nozzle (6) in the circumferential direction.

12. Arrangement for expanding containers, comprising a blowing apparatus according to at least one of the preceding claims.

13. Method for expanding containers (10) with a gaseous medium, comprising the steps:

- lowering a blowing piston (2), which comprises a blowing nozzle (6) arranged on this blowing piston (2) such that it can move in a longitudinal direction (L) of the container (10), in the longitudinal direction (2) of the container (10) as far as a predefined end position of the blowing piston (2) relative to the container (10);
- filling the container (10) with the gaseous medium through the blowing nozzle (6); **characterised in that** the blowing nozzle (6) comprises a nozzle section (14) with a first internal cross-section ($A_{nozzle, internal}$) and a nozzle piston (16), formed in one part with the nozzle section (14) and which is connected by means of a radially extending ring (15), with a second internal cross-section ($A_{piston-nozzle}$), wherein due to the different cross-sections of the blowing nozzle, the gaseous medium flowing through the blowing nozzle (6) causes the blowing nozzle (6) to exert a pressure on the container (10) in the longitudinal direction (L) during the filling process.

14. Method for filling containers according to claim 10, **characterised in that** the blowing nozzle (6) is pretensioned relative to the container (10) by means of a pretensioning device (12).

15. Method according to at least one of the preceding claims, **characterised in that** the blowing nozzle (6) is guided movably in the longitudinal direction (L) relative to the blowing piston (2) by means of a guide device (4).

**Revendications**

1. Dispositif de soufflage (1) pour l'expansion de récipients (10) par un fluide gazeux, avec un piston de soufflage (2) et avec une buse de soufflage (6) au moyen de laquelle le récipient (10) est dilaté par le fluide gazeux, le piston de soufflage (2) étant mobile dans une direction longitudinale (L) de la buse de soufflage (6), la buse de soufflage (6) étant mobile dans la direction longitudinale (L) par rapport au piston de soufflage (2) et un dispositif de guidage (4) étant prévu, lequel guide le déplacement de la buse de soufflage (6) dans la direction longitudinale (L) par rapport au piston de soufflage (2), et la buse de soufflage (6) étant configurée de manière à être repoussée dans la direction du récipient (10) par une application du fluide gazeux sur le récipient (10), **caractérisé en ce que** la buse de soufflage (6) présente un segment de buse (14) avec une première section transversale intérieure (Abuse, intérieur) et un piston de buse (16) formé d'un seul tenant avec le segment de buse (14) et qui lui est raccordé par une bague (15) à extension radiale, avec une deuxième section transversale intérieure ($A_{piston-buse}$), ladite deuxième section transversale intérieure ($A_{piston-buse}$) étant différente de la première section transversale intérieure ($A_{buse, intérieur}$).

2. Dispositif de soufflage (1) selon la revendication 1, **caractérisé en ce que** la buse de soufflage (6) est disposée radialement à l'intérieur du dispositif de guidage (4).

3. Dispositif de soufflage (1) selon la revendication 1, **caractérisé en ce que** ledit dispositif de soufflage (1) comporte un dispositif de pré-contrainte (12) qui repousse la buse de soufflage (6) vers le récipient (10), dans la direction longitudinale (L) par rapport au piston de soufflage (2).

4. Dispositif de soufflage (1) selon au moins une des revendications précédentes, **caractérisé en ce que** le dispositif de guidage (4) comporte une paroi intérieure (18) qui entoure une embouchure (10a) du récipient (10) pendant le processus de soufflage.

5. Dispositif de soufflage selon la revendication 1, **caractérisé en ce que** le dispositif de guidage (4) est disposé sur le piston de soufflage (2) et immobile dans la direction longitudinale (L) par rapport au piston de soufflage (2).

6. Dispositif de soufflage (1) selon la revendication 1, **caractérisé en ce que** le dispositif de guidage (4) est disposé de manière amovible sur le piston de soufflage (2).

7. Dispositif de soufflage (1) selon au moins une des revendications précédentes, **caractérisé en ce que** le dispositif de soufflage (1) comporte un dispositif d'étanchéité (22) qui est en contact avec une zone de l'embouchure (10a) du récipient (10) pendant le processus de soufflage et rend étanche un espace entre la buse de soufflage (6) et la zone de l'embouchure (10a) du récipient (10).

8. Dispositif de soufflage (1) selon la revendication 7, **caractérisé en ce que** la zone de l'embouchure (10a) est un bord d'embouchure supérieur (10e) du récipient (10).

9. Dispositif de soufflage (1) selon la revendication 7, **caractérisé en ce que** la zone de l'embouchure (10a) est une zone du contour extérieur de l'embouchure (10a) du récipient (10).

10. Dispositif de soufflage (1) selon au moins une des revendications précédentes, **caractérisé en ce qu'**une bague d'étanchéité (26) est disposée entre le dispositif de guidage (4) et la buse de soufflage (6).

11. Dispositif de soufflage (1) selon au moins une des revendications précédentes, **caractérisé en ce que** la buse de soufflage (6) est fixée par rapport au dispositif de guidage (4) au moyen d'un corps de vissage (24) entourant la buse de soufflage (16) dans la direction périphérique.

12. Installation pour l'expansion de récipients avec un dispositif de soufflage selon au moins une des revendications précédentes.

13. Procédé d'expansion de récipients (10) par un fluide gazeux, comprenant les étapes suivantes :

    - abaissement d'un piston de soufflage (2) avec une buse de soufflage (6) disposée de manière mobile dans une direction longitudinale (L) du récipient (10) sur ledit piston de soufflage (2), dans la direction longitudinale (2) du récipient (10) jusqu'à une position finale définie du piston de soufflage (2) par rapport au récipient (10) ;
    - remplissage en fluide gazeux du récipient (10) par la buse de soufflage (6) ; **caractérisé en ce que** la buse de soufflage (6) présente un segment de buse (14) avec une première section transversale intérieure (Abuse, intérieur) et un piston de buse (16) formé d'un seul tenant avec le segment de buse (14) et qui lui est raccordé par une bague (15) à extension radiale, avec une deuxième section transversale intérieure ($A_{piston-buse}$), la différence de sections transversales des buses de soufflage faisant que le fluide gazeux qui s'écoule par la buse de soufflage (6) pendant le processus de remplissage entraîne l'application par la buse de soufflage (6) d'une pression sur le récipient (10) dans la direction longitudinale (L).

**14.** Procédé de remplissage de récipients selon la revendication 10, **caractérisé en ce que** la buse de soufflage (6) est pré-contrainte par un dispositif de pré-contrainte (12) par rapport au récipient (10).

**15.** Procédé selon au moins une des revendications précédentes, **caractérisé en ce que** la buse de soufflage (6) est guidée au moyen d'un dispositif de guidage (4) dans la direction longitudinale (L) par rapport au piston de soufflage (2).

Fig. 1

EP 2 176 054 B1

Fig. 2

Fig. 3

12

Fig. 4

Fig. 5

$A_{Kolben-Düse}$

$A_{Wirkfläche}$

$A_{Düse-innen}$

**EP 2 176 054 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   US 4552527 A